# EUROPEAN PATENT SPECIFICATION

(11) **EP 1 806 385 B1**
(45) Date of publication and mention of the grant of the patent: **29.04.2009**
(21) Application number: 06100111.1
(22) Date of filing: 05.01.2006
(51) Int. Cl.: C09D 4/00, C08G 77/24, C08G 77/26, C08G 18/71, C08G 18/80, B05D 3/00, C23C 14/06

(54) **Easy-to-clean, mechanically stable coating composition for metallic surfaces with increased chemical resistance and process for coating a substrate using said composition**
Leicht zu reinigende, mechanisch stabile Beschichtungszusammensetzung für Metalloberflächen mit erhöhter chemischer Beständigkeit und Verfahren zum Beschichten eines Substrats unter Verwendung dieser Zusammensetzung
Composition de revêtement, mécaniquement stable, de netoyage aisé, pour surfaces métalliques à resistance chimique élevée et procédé pour revêtir un substrat avec cette composition

(43) Date of publication of application: 11.07.2007
(73) Proprietor: Fraunhofer-Gesellschaft zur Förderung der angewandten Forschung e.V., 80686 München (DE)
(72) Inventor: Schottner, Gerhard Dr., 91560, Heilsbronn (DE)
(74) Representative: Olgemöller, Luitgard Maria

(56) References cited:
- US-A- 4 231 910
- PATENT ABSTRACTS OF JAPAN vol. 1996, no. 05, 31 May 1996 (1996-05-31) & JP 08 027456 A (ASAHI GLASS CO LTD), 30 January 1996 (1996-01-30)

## Description

The present invention relates generally to a type of a mechanically stable, chemically resistant coating for metallic surfaces, and more preferably for chromed or chromium surfaces, comprising a composition based on a triazine-containing silane resin. This coating is inter alia suitable for sanitary facilities, for example sanitary fittings or fixtures. Upon application to a metallic substrate, a coating is obtained which has a very rigid structure and has a unique combination of properties that includes hydrophobicity/easy-to-clean, [a] specifically good adhesion to bright chrome, abrasion resistance and high chemical resistance.

Sanitary fittings and room fixtures, e.g. water taps, shower heads, faucets for bath tubs, towel holders, light switch plates and the like are often made from metals the surface of which is decoratively ennobled using galvanic methods. Frequently, a chromium plating is performed, which results in highly shining or glossing, aesthetically high-class surfaces which are mechanically very stable, chemically inert and rather corrosion resistant. Such water fixtures in the sanitary field are generally in a frequent or every day use and then are always in front of the user. However, surfaces of this type tend to be heavily soiled and spoilt, for example due to the deposition of soap, toothpaste or mineral deposits, e.g. calcium carbonate as a residue of running water. Moreover, the hands of the user will touch such fittings every day, and the resulting finger prints are easily visible thereon, due to sweat from the hands which remains visible as a result of the changed reflection characteristics at this area. For this reason, the fixtures need to be cleaned frequently and regularly. Tenacious depositions of mineral deposits can often be removed only with mechanical scrubbing means, and a point is easily reached beyond which the mechanical stability of the surface is no longer sufficient to withstand this mechanical impact. This results in scratches and other damage to the surface. Subsequently, the surface is even more susceptible to contamination and soiling, and finally, the surface looses its lustre and appears to show wear. This process is accelerated in regions where the water is comparatively hard, resulting in end-user complaints and finally in economic losses.

Easy to clean surface coatings are therefore frequently subject to material and surface technique development. Thus, there is a multiplicity of patents and patent applications which deal which research in this field, for example US Patent Nos. 5,644,014, and 6,245,833, or PCT Application No. WO 02/50603. However, no acceptable coating has been developed, until now, which can be applied using wet chemical processes, because the adhesion to the metal or chromium surface, respectively, was insufficient, and/or the required mechanical stability could not be maintained over a commercially appreciable time period. Moreover, a high chemical resistance which is specifically required for water taps, sink covers and the like, could not be obtained.

Sol-gel techniques offer the possibility to prepare hybrid inorganic-organic coating systems as, for example, described in Schottner, G., Chem. Mater. 2001, 13, 3422-2435, which exhibit very good adherence to surfaces of glass, or plastics. The systems also adhere to basic metals because and as far as such metals usually comprise OH-groups on their surface. Such coatings have also outstanding scratch and abrasion resistance, when compared to merely organic or thin inorganic coatings. However, durable adhesion to surfaces of passivated or noble metals, e.g. to chromium or chromed surfaces, could not be obtained. To overcome this disadvantage, sometimes only very thin coatings (< 1 µm) were applied. These thin coatings are scarcely visible and barely interact with the metal surface. Accordingly, these thin coatings wear away quickly, resulting in the loss of all beneficial mechanical properties after a short term of use. In US Pat. No. 6,887,367 (the '367 patent"), it has been proposed to pretreat the metallic surface prior to coating by chemically activating said surface using a solution containing surfactants and/or reducing the surface with a reducing agent or direct current and/or physically activating the surface using a sputter method. The thus obtained modification of the metallic surface results in a defined surface condition which is distinguished by the fact that the surface has a higher surface energy and thereby allows better adhesion of the sol-gel systems on the surface. After coating same with a sol-gel coating as mentioned above, the metallic impression of the chromic surfaces and the mechanical stability are substantially maintained. However, the chemistry for the coating described in the '367 patent is limiting such that the coating will have a thickness of less than 1 µm. If one were to make this coating thicker, it would crack because it is very brittle. Due to the very thin coating, the anti-staining properties gradually decrease in the course of time and finally disappear altogether, demonstrating the adhering properties of the coating to be not sufficient over time. Moreover, in the reflecting light, depending upon the grade and angle of illumination, diffraction and interference phenomena occur. This is also an effect due to the thinness of the coating which introduces fringe patterns that are a problem. Fringe patterns or interference patterns seen with thin clear optical coatings on a metallic substrate are the result of an interaction with light falling onto the surface and the coating. This optical phenomena is that of a typical Bragg reflector. A Bragg reflector is similar to the fringe patterns seen with an oil-on-water slick on the highway pavement.

EP 1 300 433 discloses coatings made from perfluoropolyether-modified silanes which are described to have good water/oil repellency, parting properties, chemical resistance, lubricity, durability, antifouling properties and fingerprint wipe-off. An antireflection filter is also provided comprising an inorganic antireflection layer including a surface layer in the form of a silicon dioxide-based inorganic layer, and an antifouling layer, preferably of the perfluoropolyether-modified silane, on the surface layer. The antifouling layer has a roll off angle with oleic acid of up to 5 degrees, a change of the roll off angle after solvent washing relative to the roll off angle before solvent washing up to 10 %. The coatings are intended for the preparation of display screens and other optical elements. The disadvantages of this technology are similar to those as described above: Only thin coatings can be formed (preferably 1 to 10 nm), the scratch resistance and durability (which is not determined) therefore remaining doubtful and, with high probability, not sufficient. Moreover, this technology requires fluorinated solvents for the preparation of the coatings, which is undesirable, and multilayer systems are required to achieve full performance like for antireflection and/or antisoiling properties.

Coatings of metal substrates (but not chrome) are known from EP 1 389 634 to be preparable using (per)fluorinated silanes together with inorganic, surface modified nanoparticles: The coatings are described to have antisoiling properties and scratch resistance. Fairly low layer thicknesses are achieved (<< 1 µm) with this composition, to assure antireflective properties of the film of low refractive index (1.40). The scratch resistance of said coatings is insufficient, and it remains doubtful whether they would adhere to chrome. The curing is achieved by active energy rays or photochemically, which is often unsuitable for coatings in the sanitary field. Finally, the formulation is not water-borne, but solvent based, including fluorinated solvents, and multiple coating steps are needed to achieve full performance.

Adhesion of thermoplastics to solid substrates in general is the object of US 4,231,910. For this purpose, a primer composition consisting essentially of an alkoxymethyltriazine, obtained by etherification of a methyloltriazine with a monohydric alcohol having 4 carbons or less, and one of 3-glycidoxypropyltrimethoxysilane, 2-(3,4-epoxycyclohexyl) ethyltrimethoxysilane, 2-mercapto ethyltrimethoxysilane and a partial hydrolysate of any of said silanes is used to increased both wet and dry adhesion to the substrates, which can consist of siliceous materials, metals, metal oxides or an organic solid.

A surface treating agent is disclosed in JP 08 02 7456 A for providing a base having excellent stain resistance, water repellency, chemical resistance and wear and weather resistance. It contains either a siloxane having one isocyanate group per silicon atom and SiH-residues, or a disilane comprising partly fluorinated organic residues and isocyanato groups in combination with an isocyanatosilane. No information is available about the nature of the substrate to which the surface treating agent could be applied.

It is the objective of the present invention to overcome the above mentioned disadvantages and to provide a coating which has excellent adhesion to the metallic substrate to which it has been applied, independent of the kind of surface thereof, as mentioned above, but which adheres specifically well to a chrome or chromed surface and which imparts a very good mechanical stability as well as resistance against aggressive chemicals over a prolonged time period to the object treated therewith. Moreover, it is the objective of the invention to provide a method for coating metal surfaces with a coating having the above mentioned properties, which method at the same time avoids the disadvantage of poor adhesion of the coating to the metal surface.

The invention therefore provides a method for coating a substrate and a sol-gel coating composition to be applied onto a specifically pretreated metallic surface by which the above disadvantages are overcome.

The present invention is defined by a coating composition of claim 1 and dependent claims 2-15. Further embodiments are defined by claims 16-23.

The coating composition of the present invention comprises at least components (A) and (B). (A) is a mixture made of at least the following compounds:
at least one silane having formula (I)

   (A-R)ₘ-SiX₄₋ₘ (I),
at least one compound having formula (III)

   M(Y)ₙ, (III),

   and
at least one silane having formula (IV):

   R¹ₘSiX₄₋ₘ, (IV)
wherein A is either a hydroxy or a isocyanato group, the latter being blocked by a protecting group as known in the art, R is selected from optionally substituted, n- or isoalkylene and alkenylene groups, R¹ is a partly or fully fluorinated alkyl group, X and Y are independently groups the bonding of which to the silicon or metal atom, respectively, is susceptible to hydrolyzation in the presence of water, M is a metal selected from those of the 3^{rd} and 4^{th} main group of the periodic table and of metals of the transition metal group which occur in trivalent or tetravalent condition, m is independently 1 or 2, and n is 3 in the case of M being a metal of the 3^{rd} main group or a trivalent transition metal and is 4 in the case of M being a metal of the 4^{th} main group or a tetravalent transition metal, the components of said mixture being partially or fully hydrolyzed and partly or fully condensed.

Preferably, the isocyanate protecting group in formula (I) is selected from dimethylpyrazole and cyclohexanoneimine, and/or R is selected from substituted or unsubstituted, n- or iso-alkylene groups having 1 to 12 carbon atoms. More preferably, R is selected from n-alkylene groups having 1 to 6 carbon atoms. Most preferable, R is methylene, ethylene or n-propylene.

R¹ in formula (IV) is a group preferably having 4 to 24 carbon atoms and is more preferably an alkyl group having at least 5 and preferably 6 to 10 partly or fully fluorinated carbon atoms at its end remote from the bond to the silicon atom. Even more preferably, it further contains 1 to 3 CH₂ groups between said remote end and the bond to the silicon atom.

Groups X in formulae (I) and (IV) represent residues well known in the sol-gel technique to provide hydrolyzability to the silanes to which they are attached. For example, X may be hydrogen, halogen, alkoxy, acyloxy, alkylcarbony, alkoxycarbonyl or-NR²₂ with R² being hydrogen or alkyl atom, more preferably chlorine or bromine, or an alkoxy group, for example having 1 to 4 carbon atoms. Most preferably, X is methoxy or ethoxy. M is preferable 1.

M of formula (III) is preferably selected from the group consisting of Al, Zr and Ti. Y may have the same meaning as defined for X above. Moreover, one or more radicals Y may be replaced by a chelating ligand well known in the art of organometallic chemistry. Further, one or more radicals may be replaced by an -OM(Y)ₙ₋₁ group or an oligomer derived therefrom. Y may also be one "dent" of a complexing inorganic or organic acid or its anion.

In order to obtain mixture (A), the at least one silane having formula (I), the at least one compound having formula (III), and the at least one silane having formula (IV) are partially or fully hydrolyzed and condensed. This may be performed by separately dissolving them in a suitable solvent, adding a sufficient amount of water and, if required or desired, a condensation catalyst, and then mixing the resulting solutions (sols). Alternatively, hydrolyzation of the silane(s) having formulae (I) and (IV) and of the compound(s) having formula (III) may take place in one single solution. For this purpose, the compound(s) having formula (III) may be dissolved in a suitable solvent to which a stabilizing or chelating agent is given, in order to avoid that hydrolyzation of the compound(s) having formula (III) will take place before the silanes have been added, because the metal compound(s) of formula (III) usually hydrolyze much faster than silanes, if carrying identical or comparable residues X and Y, respectively. The silane(s) of formula (I) and of formula (IV) is/are then added, either directly or dissolved in another or the same solvent as that for the compound(s) of formula (III). Subsequently, a suitable amount of water and, if required or desired, a condensation catalyst is given to the mixture, in order to initiate hydrolysis of the compounds present therein.

The solvents useful for dissolving the above mentioned compounds having formula (III), (IV) and/or (I) are known to a person skilled in the art. For example, they may be selected from the group consisting of alcohols preferably having 1 to 8 carbon atoms and alkoxyated alcohols of formula CH₃-(CH₂)ₒ-O-(CH₂)ₚOH, wherein o is an integer of preferably 1 to 8 and p is an integer of preferably 1 to 6. The stabilizing or chelating agent may for example be selected from alkyl acylalcanoates or diketones, more preferably from methyl or ethyl esters of acylacetic acids and acetylketones, and may for example be acetylacetic acid or acetylacetone.

In a preferred embodiment of the invention, the mixture (A) additionally contains at least one silane having formula (II)

Arₘ-SiX₄₋ₘ,

in partly or fully hydrolyzed and condensed form, wherein Ar is an optionally substituted aryl or arylalkylene group preferably having 6 to 18 carbon atoms, and X and m are defined as for formula (I) above. More preferably, Ar is an optionally substituted phenyl or phenylalkylene, the alkylene group having 1 to 3 carbon atoms. X is preferably halogen or an alkoxy group and most preferably chloride, methoxy or ethoxy. Silanes having formula (II) will impart additional hydrophobicity to the coating composition. Since this composition further contains at least one fluorinated compound, resulting in an increasing hydrophobicity as well, the addition of silanes having formula (II) will be optional at the discretion of the skilled person, depending on the amount of fluorinated groups present in the coating composition and on the level of hydrophobicity to be obtained.

The silane having formula (II) may be added to the solution by which mixture (A) is obtained as defined above, for example together with the silane of formula (I), either directly or dissolved in a suitable solvent. Such solvents are known in the art.

As a condensation catalyst, any catalyst known in the art can be used. E.g., amine catalyst are often used in silicon sol gel technology. More preferably, the catalyst is also a silane compound, having the following formula (V):

(NHR²-R³)ₘSiX₄₋ₘ (V)

wherein R² is hydrogen or an optionally substituted alkyl having preferably 1 to 6 carbon atoms, R³ is an optionally substitued alkylene group preferably having 1 to 8 carbon atoms, and X and m are as defined for the silane of formula (I). Most preferably, m is 1, and/or X is methoxy or ethoxy, and/or R³ is methylene, ethylene, propylene or n- or isobutylene. As will be obvious for a skilled person, this silane catalyst will not only act catalytically, but will also be integrated into the at least partly hydrolyzed and condensed network of silane(s) and metal compound(s).

Water will be added to this mixture in an amount sufficient to at least partially hydrolyze and therefore condense the different silane(s), and metal compound(s). Mixture (A) can then be stored, preferably under cooling, for days or even months, if required.

In order to prepare the sol-gel coating composition of the invention, mixture (A) is combined with at least one compound (B) which is selected from trimeric isocyanate ("isocyanurate") derivatives wherein 3 isocyanate molecules are trimerized into a triazine ring. Each of the nitrogen atoms within the triazine ring is substituted with an optionally substituted hydroxyalkylene or isocyanatoalkylene group. The isocyanurate derivatives may contain one triazine ring, or may be low polymerized isocyanurates derived therefrom.

The trimeric isocyanate (triazine) derivatives are selected from derivatives having formula (VI)

(C(O)N)₃(R⁴D)₃ (VI)

wherein R⁴ is selected from optionally substituted n- or isoalkylene groups preferably having 1 to 8 carbon atoms, and D is OH, in case A in formula (I) is a (protected) isocyanato group, or is -NCO, in case A in formula (I) is a hydroxy group.

The low polymerized isocyanurates (triazines) are selected from those having formula (VII)

(C(O)N)₃(R⁵P)ₚ(R⁴D)₃₋ₚ, (VII)

wherein R⁴ is defined as for formula (VI), R⁵ independently selected from optionally substituted n- or isoalkylene groups preferably having 1 to 8 carbon atoms, P is (-P'R⁴)(C(O)N)₃(R⁴D)₂ wherein P' is an alkylene, alkylenearylenealkylene, alkylenearylene or arylene group which can be substituted and/or wherein the carbon chain may be interrupted with -S-, -O-, -NR²-, wherein R² is defined as for formula (V) above, -C(O)-, -C(O)O-, -C(O)NH- or-NH-C(O)-NH-, and p is 1 or 2.

Before the coating composition as defined above is applied to a metal surface, for example a galvanically chrome-plated surface, this metal surface is pretreated, according to the present invention. The pretreating method may be one of those methods as disclosed in US 6,887,367, for example a chemical activation of the surface using a solution containing surfactants, a chemical activation of the surface using a reducing agent or direct current or a physical activation using a sputter method, or a combination thereof. By this pretreatment, the wetting characteristics of the metallic surface are improved (the wetting angle of water is substantially decreased). Moreover, the pretreatment implies a high surface energy to the metallic surface. In summary, the adhesion of the coating composition as defined above to be subsequently applied will substantially be improved.

It has been found most convenient to use one of the following methods: The surfaces of the article which are to be coated are contacted with an alkaline silicate solution ("waterglass"). For example, the article is immersed is such a solution. Preferably, zinc granules are present in said silicate solution. The contact time is preferably between 1 minute and one hour, and the temperature of the solution is preferably in the range of 50°C to 85°C. After removing the article or its surface from the solution, the metallic surface to be coated is rinsed with demineralized water and optionally cleaned with a wet towel in order to remove adhering silicate sol before it is dried, for example in an air flow or using compressed air.

Without wishing to be bound to any theory, the inventors believe that by this treatment, a transition layer is formed between the metallic surface and the sol-gel coating. The interface between the metallic surface and the sodium silicate layer provides a mechanical bond. The sodium silicate solution is able to penetrate into the microstructure of the e.g. electroplated chrome surface, thereby firming the mechanical bond. The sodium silicate layer presents to the sol-gel a hydroxylated surface that allows for direct bonding of the hydroxyls contained in the sol to the sodium silicate layer. In this way, good adhesion is obtained.

The coating composition can then be applied to the pretreated metallic surface, using one of the conventional techniques known in the art. Examples for such techniques are spray coating e.g. HVLP ( high volume low pressure coating which is a type of air spray gun), rotary bell atomization spray gun, immersing the surface into a bath of the coating composition, or spin coating. The application may be performed in one step or by applying more than one layer, each layer preferably being at least partially dried before application of the next one. The coating can be applied to a final thickness of about 1 to 15 µm, more preferably of 2 to 8 µm. Finally, the coating is dried or cured on the metallic surface at temperatures between about 150°C and 200°C, preferably at a temperature of about 180°C. By providing thermal curing or curing by drying, no requirements for photoinitiator chemistry are necessary.

Upon drying or curing the coating composition on the metallic surface, organic residues A (hydroxyl or protected isocyanato groups) of silane(s) having formula (I) within the at least partially condensed inorganic network of mixture (A) will react with isocyanato or hydroxyl of the isocyanato (triazine) compound(s) (B), resulting in a coating composition having a strong network which is partly based on inorganic -O-Si-O- bonds, and partly on urethane bonds which resulted from a reaction of residues A with respective hydroxyl or isocyanato residues of the isocyanato (triazine) derivatives. This may be exemplified through the following scheme 1, wherein a silane of formula (I) having a dimethylpyrazole blocked isocyanato group is depicted which has been hydrolyzed and condensed (represented by (-O)Si-group) and therefore is part of the inorganic network within mixture (A). As may be seen from said scheme, up to three silanes of this network are able to react with the isocyanurate (triazine) of formula (VI) and/or (VII), which in this case is exemplified by tris(hydroxyethelene)isocyanurate:

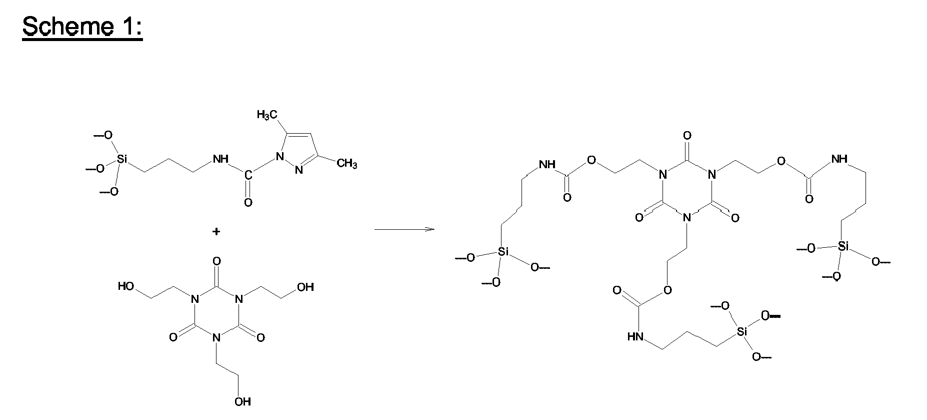

It should be appreciated that incorporation of the metal compound having formula (III) and of silane compounds having formula (II) and (IV) into the network has been omitted in the scheme for the sake of clarity. Moreover, it should be appreciated that in case the A group in silane of formula (I) is hydroxyl and the isocyanurate (triazine) carries isocyanate groups, the urethane groups will be orientated not as depicted, but in the inverse direction:

(-O)₃Si....OC(O)NH....(C(O)N)₃[.....NHC(O)O....Si(O-)₃]₂

The aromatic isocyanurate ring core is a very rigid structure. Moreover, the triazine cores are linked to the silane components via urethane bonds which are very stable against alkaline and acid agents. As will be evident for a skilled person, this rigidity together with the very stable connection between the components of the hydrolyzed and condensed silane-/metal network will result in a coating which is mechanically very stable and, at the same time, highly resistant against aggressive chemicals.

On the other side, the inventive coating, after application and processing still has some ductility that comes from the organic portion of the inorganic-organic hybrid structure. This implies the possibility to provide the coating with an increased thickness on the substrate surface, compared to prior art (see discussion of US 6,877,367 above). The coating of the present invention can be applied to the substrate, for example, in a thickness of 1 to 25µm, preferably of 2 to 10, more preferably of 3 to 10, and even more preferably of 4 to 8 µm or of 5 to 9 µm. As the coating thickness is increased above critical thickness, fringe patterns are no longer visible to the human eye. In addition, an excellent abrasion resistance is obtained.

When applied to a metallic surface which is pretreated as defined above, a very well adhering, highly cured and abrasion resistant coating is therefore obtained which has increased chemical resistance and which is easy to clean. This coating is specifically, but not exclusively, useful on chromed or chromium, preferably shining surfaces. It is, however, also useful on matt or matt shining surfaces and/or on metal surfaces having a texture. The scale of the texture can be short or long range, patterned or unpatterned.

The following examples shall illustrate the invention further.

### Example 1

6.22 g of titanium tetrapropylate are reacted with 2,19 g acetylacetone in isopropanole. After a suitable time of stirring (about 15 min.), 50 g dimethylpyrazole blocked 3-isocyanato-propyl-triethoxysilane are added, and the mixture is stirred for about another 20 min. Subsequently, 1,68 g (heptadecafluoro-1,1,2,2-tetrahydrodecyl)-triethoxysilane are added in a dropwise manner, and stirring is continued for about half an hour. By careful and slow addition of 10.94 g deionized water, hydrolysis and condensation is effected, preferably in a time period of about 12 hours. This is followed by the addition of 7.63 g trishydroxyethyl-isocyanurate and 11.27 g water. Stirring is continued. To the clear mixture, a solvent or solvent mixture and/or a flow improving agent may be added.

### Example 2

A typical 7.62 cm x 20, 32 cm (3 inch x 8 inch) electroplated chrome panel was immersed in 2500 g of sodium silicate solution. The electroplated chrome panel and the sodium silicate solution were in contact with 150 g Zinc shot in the bottom of the beaker. The pre-treatment time was 5 minutes at 70°C. The panel was rinsed with deionized water, whereafter adherent sodium silicate agglomerations were wiped away with a wet paper towel. The panel was then dried with an air knife, making it ready for coating application.

### Example 3

The mixture obtained according to Example 1 was applied to the pretreated chrome panel of example 2 by spraying with an HVLP gun. The coating was then cured by heating in a forced air convection oven for 2 hours at 180°C.

An optically clear coating is obtained on the panel which has a unique combination of properties that includes hydrophobicity/easy-to-clean, adhesion to bright chrome, abrasion resistance, and high chemical resistance.

The coated chrome panel of example 3 was inspected and found to have the properties depicted in Table 1:

**Table 1**

| | |
|---|---|
| layer thickness | about 5 µm |
| solvent-resistance (methylethyl ketone) | 200 strokes (no visible effect) |
| CASS Test (200 hrs) (1) | stable (no significant change in contact angle with water) |
| mandrel bend test (3mm) | Crack formation, but no delamination |
| Contact angle with water | 104° |
| Roll-off angle with water | 15° |
| Cross hatch adhesion characteristic (DIN* 53151) *German Industrial Norm | Gt 0 |
| Adhesion after water immersion (240 h at 38°C) | Gt 0 |
| Pencil hardness | 6 H (scratches) 9 H (deformation) |
| Microhardness (nanoindentor) | 511 - 519 MPa |
| Chemical Resistance | 6 N acetic acid (no effect) |
| | phosphoric acid (42,5 %, no effect) |
| | ammonium hydroxide (6 N, no effect) |
| | methanol (no effect) |
| | trixon X, tenside (no effect) |
| | 18N NaOH (no turbidity) |
| | 6N NaOH (no turbidity) |
| | 6N HCl (no turbidity) |
| Modulus of elasticity | 5,15-5,16 GPa |

| | |
|---|---|
| (1) The conditions of the CASS test are specified by (US) ASTM B 368. The CASS test is a copper-accelerated acetic acid salt spray test. The salt fog created for this test is created from a solution of 5% sodium chloride in ASTM D1193 Type IV water with 0.25 g of reagent grade copper chloride (CuCl₂x2H₂O) per liter of solution. The solution is delivered to the chamber as a fog at a temperature of 60° to 65° at a pressure of 0.08 to 0.12 MPa. The pH of this solution is adjusted to a pH range of 3.1 to 3.3 as measured on a sample of the collected spray. The chamber temperature is held at 49±1 °C. | |

## Claims

1. A coating composition, comprising
(A) a mixture made of at least the following components:
at least one silane having formula (I)
(A-R)ₘSiX₄₋ₘ,
at least one compound having formula (III)
M(Y)ₙ, and
at least one partially or fully fluorinated silane having formula (IV)
R¹ₘSiX₄₋ₘ,
wherein A is either a hydroxy or a isocyanato group, the latter being blocked by a protecting group, R is selected from optionally substituted, n- or iso alkylene groups and alkenylene groups, R¹ is a partly or fully fluorinated alkyl group, X and Y are independently groups the bonding of which to the silicon or metal atom, respectively, is susceptible to hydrolyzation in the presence of water, M is a metal selected from those of the 3^{rd} and 4^{th} main group of the ' periodic table and of metals of the transition metal group occuring in the trivalent or tetravalent condition, m is independently 1 or 2, and n is 3 in the case of M being a metal of the 3^{rd} main group or a trivalent transition metal and is 4 in the case of M being a metal of the 4^{th} main group or a tetravalent transition metal,
the components of said mixture being partially or fully hydrolyzed and partly or fully condensed,
(B) at least one triazine derivative, selected from
- derivatives having formula (VI)
(C(O)N)₃(R⁴D)₃ (VI)
wherein R⁴ is selected from optionally substituted n- or isoalkylene groups, and D is OH, in case A in formula (I) is a protected isocyanato group, or is NCO, in case A in formula (I) is a hydroxy group, and
- derivatives having formula (VII)
(C(O)N)₃(R⁵P)ₚ(R⁴D)_{3-p,} (VII)
wherein R⁴ is defined as for formula (VI), R⁵ is independently selected from optionally substituted n- or isoalkylene groups, P is (-P'R⁴)(C(O)N)₃(R⁴D)₂ wherein P' is an alkylene, alkylenearylenealkylene, alkylenearylene or arylene group which can be substituted and/or wherein the carbon chain may be interrupted with -S-, -O-, -NR²-, wherein R² is hydrogen or an optionally substituted alkyl having preferably 1 to 6 carbon atoms -C(O)-, -C(O)O-, -C(O)NH- or -NH-C(O)-NH-, and p is 1 or 2.

2. The coating composition as claimed in claim 1, wherein m in formula (I) is 1 and/or wherein m in formula (IV) is 1.

3. The coating composition as claimed in claim 1 or 2, further comprising
at least one silane having formula (II)
Arₘ-SiX₄₋ₘ, (II)
in partially or fully hydrolyzed and partially or fully condensed form, wherein Ar is an optionally substituted aryl or arylalkylene group, and X and m are defined as for formula (I) in claim 1, wherein the silane having formula (II) is part of mixture (A).

4. The coating composition of claim 3, wherein m in formula (II) is 1.

5. The coating composition of claim 1, wherein A in formula (I) is a blocked isocyanato group and wherein D in formula (VI) and/or (VII) is OH.

6. The coating composition of claim 5 wherein A in formula (I) is an isocyanato group, blocked with dimethylpyrazole.

7. The coating composition of any of the preceding claims, wherein X in formulae (I), (II) and (IV) is independently selected from halogen atoms or alkoxy groups preferably having 1 to 4 carbon atoms.

8. The coating composition of any of the preceding claims, wherein Y in formula (III) is independently selected from halogen atoms or alkoxy groups preferably having 1 to 4 carbon atoms.

9. The coating composition as claimed in any of the preceding claims, wherein the mixture as defined in (A) additionally comprises a condensation catalyst.

10. The coating composition of claim 9, wherein the condensation catalyst is an aminoalkyltrialkoxysilane.

11. The coating composition as claimed in any of the preceding claims, additionally containing a suitable solvent.

12. The coating composition as claimed in claim 11, wherein the solvent is selected from the group consisting of alcohols preferably having 1 to 8 carbon atoms and alkoxyalcohols of formula CH₃-(CH₂)ₒ-O-(CH₂)ₚOH, wherein o is an integer of 1 to 8 and p is an integer of 1 to 6.

13. The coating composition as claimed in claim 1, wherein M in the compound having formula (III) is selected from Ti, Zr, and Al.

14. The coating composition as claimed in claim 1-3, wherein at least 2 groups Y in the compound having formula (III) are part of a chelating agent.

15. The coating composition as claimed in claim 14, wherein the chelating agent is acetylacetone.

16. A process for coating a substrate having a metallic surface, the process comprising the steps:
- providing a suitable substrate,
- pretreating the substrate
- applying one or more layers of a coating composition as claimed in any of claims 1 to 15 onto the surface and
- drying or curing each of the layers or the one or more layers of the said coating composition.

17. Process according to claim 16, wherein the metallic surface of the substrate is a chromium or chromed surface.

18. Process according to claim 16 or claim 17, wherein the pre-treatment is performed using at least one of the following methods:
chemically activating the surface using a solution containing surfactants, chemically activating the surface using an activated solution comprising ≡Si(OH) groups,
chemically activating the surface using a reducing agent or direct current, physically activating the surface using a sputter method, or a combination thereof.

19. Process according to claim 18, wherein the pre-treatment is performed by contacting the surface with a solution of a alkaline silicate solution or waterglass.

20. Process according to claim 19, wherein the said silicate solution or waterglass additionally contains a solid basic metal which can easily be reduced.

21. Process according to claim 20, wherein the basic metal is zinc.

22. Process according to any of claims 16 to 21, wherein the said coating composition is applied to a final thickness of 1 to 25 µm.

23. Process according to any of claims 16 to 22, wherein the curing temperature is between 150°C and 200°C.

## Patentansprüche

1. Beschichtungszusammensetzung, umfassend
(A) ein Gemisch, hergestellt aus zumindest den folgenden Bestandteilen:
mindestens einem Silan der Formel (I)
(A-R)ₘSiX₄₋ₘ,
mindestens einer Verbindung der Formel (III)
M(Y)ₙ und
mindestens einem teilweise oder vollständig fluorierten Silan der Formel (IV)
R¹ₘSiX₄₋ₘ,
worin A entweder eine Hydroxy- oder eine Isocyanatgruppe ist, wobei die letztere durch eine Schutzgruppe blockiert ist, R ausgewählt ist unter fakultativ substituierten n- oder iso-Alkylengruppen und Alkenylengruppen, R¹ eine teilweise oder vollständig fluorierte Alkylgruppe ist, X und Y unabhängig voneinander Gruppen sind, deren Bindung an das jeweilige Silicium- oder Metallatom in Gegenwart von Wasser einer Hydrolyse zugänglich ist, M ein Metall ist, welches ausgewählt ist aus den Metallen der 3. und 4. Hauptgruppe des Periodensystems und aus Metallen der Übergangsmetallgruppe, die dreiwertig oder vierwertig vorkommen, m unabhängig 1 oder 2 bedeutet und n 3 ist, wenn M ein Metall der 3. Hauptgruppe oder ein dreiwertiges Übergangsmetall ist, und n 4 ist, wenn M ein Metall der 4. Hauptgruppe oder ein vierwertiges Übergangsmetall ist, wobei die Bestandteile des genannten Gemisches teilweise oder vollständig hydrolysiert and teilweise oder vollständig kondensiert sind,
(B) zumindest ein Triazinderivat, ausgewählt aus
- Derivaten der Formel (VI)
(C(O)N)₃(R⁴D)₃ (VI)
worin R⁴ ausgewählt ist aus fakultativ substituierten n- oder Isoalkylengruppen und D OH ist, wenn A in der Formel (I) eine geschützte Isocyanatgruppe ist, oder NCO ist, falls A in der Formel (I) eine Hydroxygruppe ist, und
- Derivaten der Formel (VII)
(C(O)N₃(R⁵P)ₚ(R⁴D)₃₋ₚ, (VII)
worin R⁴ wie in Formel (VI) definiert ist, R⁵ unabhängig ausgewählt ist aus fakultativ substituierten n- oder Isoalkylengruppen, P (-P'R⁴)(C(O)N)₃(R⁴D)₂ bedeutet, worin P' eine Akylen-, Alkylenarylenalkylen-, Alkylenarylen- oder Arylengruppe ist, die substituiert sein kann und/oder worin die Kohlenstoffkette unterbrochen sein kann durch -S-, -O-, -NR²-, worin R² Wasserstoff ist oder ein fakultativ substituiertes Alkyl mit vorzugsweise 1 bis 6 Kohlenstoffatomen, -C(O)-, -C(O)O-, -C(O)NH- oder -NH-C(O)-NH-, und p 1 oder 2 ist.

2. Beschichtungszusammensetzung wie in Anspruch 1 beansprucht, worin m in der Formel (I) 1 ist und/oder worin m in der Formel (IV) 1 ist.

3. Beschichtungszusammensetzung wie in Anspruch 1 oder 2 beansprucht, weiter umfassend
mindestens ein Silan der Formel (II)
Arₘ-SiX₄₋ₘ, (II)
in teilweise oder vollständig hydrolysierter und teilweise oder vollständig kondensierter Form, worin Ar eine fakultativ substituierte Aryl- oder Arylalkylengruppe ist und X und m wie in Formel (I) in Anspruch 1 definiert sind, worin das Silan der Formel (II) Teil des Gemisches (A) ist.

4. Beschichtungszusammensetzung nach Anspruch 3, worin m in Formel (II) 1 ist.

5. Beschichtungszusammensetzung nach Anspruch 1, worin A in Formel (I) eine blockierte Isocyanatgruppe ist und worin D in Formel (VI) und/oder (VII) OH ist.

6. Beschichtungszusammensetzung nach Anspruch 5, worin A in Formel (I) eine mit Dimethylpyrazol blockierte Isocyanatgruppe ist.

7. Beschichtungszusammensetzung nach einem der vorhergehenden Ansprüche, worin X in den Formeln (I), (II) und (IV) unabhängig ausgewählt ist aus Halogenatomen oder Alkoxygruppen mit vorzugsweise 1 bis 4 Kohlenstoffatomen.

8. Beschichtungszusammensetzung nach einem der vorhergehenden Ansprüche, worin Y in Formel (III) unabhängig ausgewählt ist aus Halogenatomen oder Alkoxygruppen mit vorzugsweise 1 bis 4 Kohlenstoffatomen.

9. Beschichtungszusammensetzung nach einem der vorhergehenden Ansprüche, worin das Gemisch, wie in (A) definiert, zusätzlich einen Kondensationskatalysator umfasst.

10. Beschichtungszusammensetzung nach Anspruch 9, worin der Kondensationskatalysator ein Aminoalkyltrialkoxysilan ist.

11. Beschichtungszusammensetzung nach einem der vorhergehenden Ansprüche, welche zusätzlich ein geeignetes Lösungsmittel enthält.

12. Beschichtungszusammensetzung nach Anspruch 11, worin das Lösungsmittel ausgewählt ist aus der Gruppe bestehend aus Alkoholen mit vorzugsweise 1 bis 8 Kohlenstoffatomen und aus Alkoxyalkoholen der Formel CH₃-(CH₂)ₒ-O-(CH₂)ₚOH, worin o eine ganze Zahl von 1 bis 8 und p eine ganze Zahl von 1 bis 6 ist.

13. Beschichtungszusammensetzung nach Anspruch 1, worin M in der Verbindung der Formel (III) ausgewählt ist aus Ti, Zr und Al.

14. Beschichtungszusammensetzung nach Anspruch 13, worin mindestens zwei Gruppen Y in der Verbindung der Formel (III) Teil eines Chelatbildners sind.

15. Beschichtungszusammensetzung nach Anspruch 14, worin der Chelatbildner Acetylaceton ist.

16. Verfahren zum Beschichten eines Substrats mit metallischer Oberfläche, wobei das Verfahren die folgenden Schritte umfasst:
- Bereitstellen eines geeigneten Substrats,
- Vorbehandeln des Substrats,
- Aufbringen einer oder mehrerer Schichten einer Beschichtungszusammensetzung gemäß einem der Ansprüche 1 bis 15 auf die Oberfläche und
- Trocknen oder Härten jeder der Schichten oder der einen oder mehreren Schichten der Beschichtungszusammensetzung.

17. Verfahren nach Anspruch 16, worin die metallische Oberfläche des Substrats eine aus Chrom bestehende oder verchromte Oberfläche ist.

18. Verfahren nach Anspruch 16 oder Anspruch 17, worin die Vorbehandlung durch Verwenden mindestens einer der folgenden Verfahren ausgeführt wird:
chemisches Aktivieren der Oberfläche unter Verwenden einer ein oberflächenaktives Mittel enthaltenden Lösung,
chemisches Aktivieren der Oberfläche unter Verwenden einer ≡Si(OH)-Gruppen enthaltenden, aktivierten Lösung,
chemisches Aktivieren der Oberfläche unter Verwenden eines Reduktionsmittels oder von Gleichstrom,
physikalisches Aktivieren der Oberfläche unter Verwenden eines Sputterverfahrens, oder
einer Kombination der genannten Methoden.

19. Verfahren nach Anspruch 18, worin die Vorbehandlung durch Kontaktieren der Oberfläche mit einer Lösung einer alkalischen Silikatlösung oder Wasserglas erfolgt.

20. Verfahren nach Anspruch 19, worin die Silikatlösung oder das Wasserglas zusätzlich ein festes basisches Metall enthält, das leicht reduziert werden kann.

21. Verfahren nach Anspruch 20, worin das basische Metall Zink ist.

22. Verfahren nach einem der Ansprüche 16 bis 21, worin die Beschichtungszusammensetzung bis zu einer Enddicke von 1 bis 25µm aufgetragen wird.

23. Verfahren nach einem der Ansprüche 16 bis 22, worin die Härtungstemperatur zwischen 150°C und 200°C beträgt.

## Revendications

1. Composition de revêtement, comprenant
(A) un mélange constitué au moins des composants suivants :
au moins un silane ayant la formule (I)
(A-R)ₘSiX₄₋ₘ,
au moins un composé ayant la formule (III)
M(Y)ₙ, and
au moins un silane partiellement ou entièrement fluoré ayant la formule (IV)
R¹ₘSiX₄₋ₘ,
dans lequel A est soit un groupe hydroxy soit un groupe isocyanato, ce dernier étant bloqué par un groupe de protection, R est sélectionné parmi les groupes n- ou isoalkylène éventuellement substitués et les groupes alkénylène éventuellement substitués, R¹ est un groupe alkyl partiellement ou entièrement fluoré, X et Y sont des groupes indépendants dont la liaison avec l'atome de silicium ou de métal, respectivement, est sensible à l'hydrolysation en présence d'eau, M est un métal sélectionné parmi ceux des 3^{ème} et 4^{ème} groupes principaux du tableau périodique et les métaux du groupe de métaux de transition à l'état trivalent ou tétravalent, m est indépendamment 1 ou 2, et n est 3 dans le cas où M est un métal du 3^{ème} groupe principal ou un métal de transition trivalent et est 4 dans le cas où M est un métal du 4^{ème} groupe principal ou un métal de transition tétravalent,
les composants dudit mélange étant partiellement ou entièrement hydrolysés et partiellement ou entièrement condensés,
(B) au moins un dérivé de triazine, sélectionné parmi
- les dérivés ayant la formule (VI)
(C(O)N)₃(R⁴D)₃ (VI)
dans lequel R⁴ est sélectionné parmi les groupes n- ou isoalkylène éventuellement substitués et D est OH, dans le cas où A dans la formule (I) est un groupe isocyanato protégé, ou est NCO, dans le cas où A dans la formule (I) est un groupe hydroxy, et
- les dérivés ayant la formule (VII)
(C(O)N)₃(R⁵P)ₚ(R⁴D)₃₋ₚ, (VII)
dans lequel R⁴ est défini comme pour la formule (VI), R⁵ est sélectionné indépendamment parmi les groupes n- ou isoalkylène éventuellement substitués, P est (-P'R⁴)(C(O)N)₃(R⁴D)₂ dans lequel P' est un groupe alkylène, un groupe alkylène-arylène-alkylène, un groupe alkylène-arylène ou un groupe arylène qui peut être substitué et/ou dans lequel la chaîne de carbone peut être interrompue avec -S-, -O-, -NR²-, dans lequel R² est de l'hydrogène ou un alkyle éventuellement substitué, ayant de préférence 1 à 6 atomes de carbone, -C(O)-, -C(O)O-, -C(O)NH- ou -NH-C(O)-NH-, et p est 1 ou 2.

2. Composition de revêtement telle que revendiquée dans la revendication 1, dans laquelle m dans la formule (I) est 1 et/ou dans laquelle m dans la formule (IV) est 1.

3. Composition de revêtement telle que revendiquée dans la revendication 1 ou 2, comprenant en outre au moins un silane ayant la formule (II)
Arₘ-SiX₄₋ₘ, (II)
sous une forme partiellement ou entièrement hydrolysée et partiellement ou entièrement condensée, dans laquelle Ar est un groupe aryle ou arylalkylène éventuellement substitué, et X et m sont définis comme pour la formule (I) dans la revendication 1, dans laquelle le silane ayant la formule (II) fait partie du mélange (A).

4. Composition de revêtement de la revendication 3, dans laquelle m dans la formule (II) est 1.

5. Composition de revêtement de la revendication 1, dans laquelle A dans la formule (I) est un groupe isocyanato bloqué et dans laquelle D dans la formule (VI) et/ou (VII) est OH.

6. Composition de revêtement de la revendication 5, dans laquelle A dans la formule (I) est un groupe isocyanato, bloqué avec du diméthylpyrazole.

7. Composition de revêtement de l'une quelconque des revendications précédentes, dans laquelle X dans les formules (I), (II) et (IV) est sélectionné indépendamment parmi les atomes d'halogène ou les groupes alkoxy ayant de préférence 1 à 4 atomes de carbone.

8. Composition de revêtement de l'une quelconque des revendications précédentes, dans laquelle Y dans la formule (III) est sélectionné indépendamment parmi les atomes d'halogène ou les groupes alkoxy ayant de préférence 1 à 4 atomes de carbone.

9. Composition de revêtement telle que revendiquée dans l'une quelconque des revendications précédentes, dans laquelle le mélange tel que défini dans (A) comprend en outre un catalyseur de condensation.

10. Composition de revêtement de la revendication 9, dans laquelle le catalyseur de condensation est un aminoalkyltrialkoxysilane.

11. Composition de revêtement telle que revendiquée dans l'une quelconque des revendications précédentes, contenant en outre un solvant approprié.

12. Composition de revêtement telle que revendiquée dans la revendication 11, dans laquelle le solvant est sélectionné parmi le groupe composé d'alcools ayant de préférence 1 à 8 atomes de carbone et d'alkoxyalcools de formule CH₃-(CH₂)ₒ-O-(CH₂)ₚOH, dans laquelle o est un nombre entier de 1 à 8 et p est un nombre entier de 1 à 6.

13. Composition de revêtement telle que revendiquée dans la revendication 1, dans laquelle M dans le composé ayant la formule (III) est sélectionné parmi Ti, Zr et Al.

14. Composition de revêtement telle que revendiquée dans la revendication 13, dans laquelle au moins 2 groupes Y dans le composé ayant la formule (III) font partie d'un agent chélateur.

15. Composition de revêtement telle que revendiquée dans la revendication 14, dans laquelle l'agent chélateur est de l'acétylacétone.

16. Procédé de revêtement d'un substrat ayant une surface métallique, le processus comprenant les étapes de :
- fourniture d'un substrat approprié,
- prétraitement du substrat,
- application d'une ou plusieurs couches d'une composition de revêtement telle que revendiquée dans l'une quelconque des revendications 1 à 15 sur la surface, et
- séchage et cuisson de chacune des couches ou de la couche ou des couches de ladite composition de revêtement.

17. Procédé selon la revendication 16, dans lequel la surface métallique du substrat est une surface en chrome ou chromée.

18. Procédé selon la revendication 16 ou la revendication 17, dans lequel le prétraitement est effectué en utilisant au moins l'un des procédés suivants :
l'activation chimique de la surface en utilisant une solution contenant des surfactants,
l'activation chimique de la surface en utilisant une solution activée comprenant les groupes ≡Si(OH),
l'activation chimique de la surface en utilisant un agent de réduction ou un courant continu,
l'activation physique de la surface en utilisant un procédé de pulvérisation, ou
une combinaison de ceux-ci.

19. Procédé selon la revendication 18, dans lequel le prétraitement est effectué par mise en contact de la surface avec une solution composée d'une solution de silicate alcalin ou de silicate de sodium.

20. Procédé selon la revendication 19, dans lequel ladite solution de silicate ou de silicate de sodium contient en outre un métal basique solide qui peut être facilement réduit.

21. Procédé selon la revendication 20, dans lequel le métal basique est du zinc.

22. Procédé selon l'une quelconque des revendications 16 à 21, dans lequel ladite composition de revêtement est appliquée à une épaisseur finale de 1 à 25 µm.

23. Procédé selon l'une quelconque des revendications 16 à 22, dans lequel la température de cuisson est située entre 150°C et 200°C.
